Europäisches Patentamt

(19) European Patent Office

Office européen des brevets

(11) Numéro de publication : **0 009 455**
**B1**

(12) **FASCICULE DE BREVET EUROPÉEN**

(45) Date de publication du fascicule du brevet :
**29.02.84**

(21) Numéro de dépôt : **79400670.0**

(22) Date de dépôt : **21.09.79**

(51) Int. Cl.³ : **F 28 C   3/16**, B 01 J   8/34,
B 01 J   8/04

(54) **Dispositif perfectionné d'échange thermique entre des particules solides et un courant gazeux.**

(30) Priorité : **21.09.78 FR 7827057**

(43) Date de publication de la demande :
**02.04.80 Bulletin 80/07**

(45) Mention de la délivrance du brevet :
**29.02.84 Bulletin 84/09**

(84) Etats contractants désignés :
**AT BE CH DE FR GB IT LU NL SE**

(56) Documents cités :
**DE-A- 1 767 972**
**FR-A-   978 287**
**FR-A- 1 469 109**
**FR-A- 2 066 178**
**GB-A-   676 613**
**GB-A- 1 277 332**
**AUFBEREITUNGS-TECHNIK, vol. 15, (1974) no. 12 K.**
**ROEBEN et al.: "Praktische Anwendungen von Mehr-**
**stufen-Rieselboden-Wirbelschichtapparaten",  pages**
**665-69**

(73) Titulaire : **SAINT-GOBAIN VITRAGE**
**Les Miroirs 18, avenue d'Alsace**
**F-92400 Courbevoie (FR)**

(72) Inventeur : **Meunier, Georges**
**20 Rue des Moulins**
**F-49640 Morannes (FR)**

(74) Mandataire : **de Toytot, Robert et al**
**SAINT-GOBAIN RECHERCHE 39 quai Lucien Lefranc**
**F-93300 Aubervilliers (FR)**

Jouve, 18, rue St-Denis, 75001 Paris, France

**0 009 455**

Dispositif perfectionné d'échange thermique entre des particules solides et un courant gazeux

La présente invention concerne un dispositif d'échange thermique, par mise en contact direct, dans une colonne à garnissage, de particules solides s'écoulant par gravité et d'un courant gazeux ascendant.

La mise en contact de particules solides et d'un courant gazeux est une opération industrielle couramment utilisée pour effectuer une modification physique ou chimique des particules ou du courant gazeux. On peut citer, par exemple, les opérations de séchage, d'échange thermique, d'oxydation catalytique, etc...

Pour réaliser de telles opérations, une solution connue consiste à faire circuler à contre-courant, dans un échangeur rudimentaire, comprenant une simple colonne, sans garnissage, un courant gazeux et des particules solides. Le rendement de cette installation est généralement faible, ce qui conduit, pour obtenir une efficacité satisfaisante, à faire appel à des échangeurs de très grand encombrement.

On a utilisé également, notamment pour les réactions catalytiques, des dispositifs à lits fluidisés denses, éventuellement en série. On sait qu'un lit fluidisé dense se forme lorsque, des particules étant disposées en tas sur un support perforé, ou grille de fluidisation, et un courant gazeux ascendant porteur étant émis à partir de la grille, la vitesse de ce courant atteint une première valeur critique, dite vitesse minimale de fluidisation, au-delà de laquelle la perte de charge du courant gazeux au travers du lit marque un palier ; elle croît à nouveau lorsque la vitesse du courant gazeux atteint une valeur telle que se produit le transport pneumatique des particules solides, cette seconde valeur critique correspondant sensiblement à la vitesse de chute libre d'une particule isolée.

Un tel lit fluidisé dense, d'une large plage de fonctionnement possède de nombreuses propriétés présentant des analogies avec celles d'un liquide agité par l'ébullition. Ainsi, les solides et les gaz contenus dans le lit, et par conséquent ceux qui s'en échappent, se trouvent sensiblement à température uniforme. Pour cette raison, les performances d'échangeurs thermiques utilisant un unique lit fluidisé se trouvent limitées, le niveau de température des phases sortant du lit ne pouvant qu'être intermédiaire entre ceux des phases entrant dans le lit, et, pour mieux épuiser la chaleur contenue dans un gaz de fluidisation en la transférant à des particules solides, on fait couramment appel à des échangeurs comportant plusieurs lits fluidisés en série. Ces dispositifs donnent lieu malheureusement à des pertes de charge très importantes, souvent incompatibles avec les pressions de gaz disponibles, et en tout état de cause, coûteuses en énergie, pour autant qu'ils prévoient le transfert des particules solides d'un étage à l'autre par des trop-pleins (lits fluidisés denses « en cascade »).

Des perfectionnements aux échangeurs à lits fluidisés en série, visant à éviter ces inconvénients, se trouvent en effet avoir également été décrits, notamment, par un article de RYOZO TOEI et TAKESHI AKAO publié à LONDRES en 1968 dans l. Chem. E. SYMPOSIUM SERIES N° 30 (1968 Instn. chem. Engrs, LONDON) et par le brevet GB-A-1 277 332, qui font appel à des grilles de fluidisation à larges perforations, dites grilles pleureuses : ces perforations sont de dimensions telles qu'elles évitent la formation de voûtes et permettent aux particules solides du lit fluidisé d'un étage de s'en échapper par « pleurage » pour atteindre le lit fluidisé de l'étage immédiatement inférieur.

Le lit fluidisé retenu par une grille de ce type est d'autant plus dilué que sont importants le diamètre des perforations et le taux d'ouverture, c'est-à-dire le rapport de l'aire cumulée des ouvertures à l'aire totale de la grille.

En pratique, on préconise généralement des perforations de diamètre représentant 5 à 30 fois celui des particules à fluidiser, le taux d'ouverture étant de préférence compris, selon l'article précédemment cité, entre 0,3 et 0,45 et même, selon le brevet anglais, entre 0,60 et 0,75, alors que le taux d'ouverture des grilles usuellement utilisées pour l'obtention des lits fluidisés denses non pleureurs est de l'ordre de 0,01 à 0,05. Un avantage important de telles grilles est de ne donner lieu qu'à une faible perte de charge, d'autant plus faible que le taux d'ouverture est plus élevé, pratiquement de l'ordre de 10 à 30 mm de colonne d'eau dans le dispositif décrit par le brevet anglais cité ci-dessus, au lieu de 100 à 200 mm pour les lits fluidisés denses usuels.

En contre-partie, les grilles pleureuses présentent une plage de fonctionnement relativement étroite, notamment quant aux débits de solides et de gaz, pour une géométrie donnée.

Il s'ensuit que les échangeurs qui font appel à de telles grilles en série, et qui doivent en utiliser un grand nombre étant donné le faible temps de séjour moyen des particules à chaque étage, ne peuvent conduire à une bonne efficacité qu'aux prix d'une optimisation des caractéristiques géométriques des diverses grilles, et de leur mutuelle adaptation, en tenant compte, notamment, de la variation de la température d'un étage à l'autre, cette bonne efficacité étant encore alors soumise à la condition du respect du régime de fonctionnement prévu.

On a aussi proposé, dans le brevet français FR-A-978 287, de faire circuler dans une colonne à garnissage des particules solides s'écoulant par gravité et un courant gazeux ascendant, la vitesse du courant gazeux étant, en dessus et en dessous du garnissage, plus petite que la vitesse de chute libre des particules solides.

Le régime obtenu dans cette forme de réalisation est un état de fluidité des particules solides entre les éléments de garnissage, constitués par exemple par des anneaux de Raschig.

Ce procédé a trouvé en particulier une application dans un procédé de réchauffage de sable pour la

0 009 455

fabrication du verre, tel que décrit dans le brevet français FR-A-1 469 109, faisant appel à une série de grilles de fluidisation supportant des éléments de garnissage.

La présente invention a pour objet d'améliorer l'efficacité d'un tel procédé d'échange thermique par mise en contact de particules solides s'écoulant par gravité à contre-courant d'un courant gazeux.

Dans le cadre des recherches effectuées, il a pu être constaté que, lorsque des particules solides s'écoulent par gravité à contre-courant d'un courant gazeux dans une colonne comprenant au moins un étage constitué d'un empilement d'éléments de garnissage disposés sur un support, et lorsque ce support présente une ouverture telle que la perte de charge du courant gazeux à travers ce support est négligeable devant celle à travers l'empilement, il peut apparaître un régime d'écoulement lâche caractérisé par une distribution locale de la suspension de particules plus homogène et/ou plus dense dans la partie supérieure de l'empilement que dans sa partie inférieure. C'est un tel type d'écoulement qui permet d'obtenir, avec une faible perte de charge, un échange thermique efficace entre les particules solides et le courant gazeux.

Ce type d'écoulement particulièrement favorable, différent de celui qu'on observe dans les lits fluidisés denses garnis proposés par le brevet français dernier cité, ne peut être effectivement obtenu que si le taux d'ouverture du support est tel qu'il ne se forme pas, à la vitesse du courant gazeux, un lit fluidisé dense à son contact.

On constate en effet, que si on réduit le taux d'ouverture du support de façon à augmenter la rétention des solides pour se rapprocher de la technique des lits fluidisés denses, on ne peut maintenir ce régime privilégié d'écoulement entre les éléments de garnissage, avec le double inconvénient d'augmenter la perte de charge dans l'étage et de diminuer son efficacité d'échange.

La présente invention a ainsi pour objet un dispositif d'échange thermique par mise en contact direct de particules solides s'écoulant par gravité et d'un courant gazeux ascendant dans une colonne comprenant au moins un étage constitué d'un empilement d'éléments de garnissage disposé sur un support, ce dispositif étant caractérisé en ce que, afin qu'il ne se forme pas, au contact dudit support, de lit fluidisé dense, le taux d'ouverture du support est au moins égal à 75 % de la porosité de l'empilement des éléments de garnissage, la perte de charge au travers dudit support étant rendue négligeable devant la perte de charge à travers l'empilement, et la vitesse moyenne du courant gazeux dans l'étage de garnissage étant comprise entre 1 fois et 1,5 fois la vitesse moyenne de chute libre des particules.

De préférence, selon l'invention, le taux d'ouverture du support sera même au moins égal à 90 % de la porosité de l'empilement.

En outre, selon un moyen connu en soi et qui ne fait pas l'objet de l'invention, afin d'être assuré d'éviter la formation de voûtes de particules solides au-dessus des orifices ménagés dans les supports d'éléments de garnissage, pour le passage desdites particules, ces orifices présenteront des dimensions minimales adaptées à celles desdites particules, c'est-à-dire au moins de l'ordre de celles qui sont recommandées pour les grilles de fluidisation pleureuses, définies plus haut, ces dimensions restant toutefois, évidemment, inférieures à celles des éléments de garnissage à suppporter.

Pratiquement, dans le dispositif de l'invention, les supports de garnissage se présenteront donc avantageusement sous la forme de caillebotis constitués de lames d'acier de faibles épaisseurs, sur chant, offrant ainsi la plus faible résistance possible au passage du flux gazeux, et donc une perte de charge minimale, tout en optimisant la résistance mécanique, afin que le niveau de cette propriété ne vienne pas limiter la quantité d'éléments de garnissage à placer sur lesdits supports.

A cet égard, il a d'ailleurs été constaté, dans le cadre de l'invention, que l'efficacité d'un étage ne croît pas régulièrement avec la hauteur de l'empilement : à partir d'une certaine hauteur d'empilement, une augmentation de la hauteur n'accroît pas de façon notable l'efficacité. Aussi, d'un point de vue économique, on peut pratiquement se limiter à une hauteur d'empilement relativement faible et il apparaît particulièrement avantageux, au lieu d'utiliser un seul étage ayant une hauteur d'empilement importante, d'utiliser plusieurs étages ayant des hauteurs d'empilement plus faibles.

En outre, la valeur de cette hauteur économiquement optimale de l'empilement est une fonction décroissante de la vitesse du courant gazeux. Par exemple, lorsqu'on effectue un échange thermique entre de l'air chaud à 250 °C et du sable ayant un diamètre moyen de 200 $\mu$m dans une colonne comportant un empilement d'éléments de garnissage d'une dimension moyenne comprise entre 10 et 30 mm, la hauteur de l'empilement à laquelle l'échange est pratiquement maximum est d'environ 15 cm pour une vitesse du courant gazeux de 1,3 m/s et de 40 pour une vitesse de 1,0 m/s.

Aussi, selon une caractéristique de la présente invention, pour augmenter l'efficacité globale de l'échange thermique effectué dans une colonne de section constante, on utilise plusieurs étages et l'on adapte la hauteur des empilements de chaque étage à la vitesse du courant gazeux traversant chaque étage, c'est-à-dire que l'on utilise une hauteur d'empilement plus grande pour les étages supérieurs lorsque la colonne fonctionne en refroidisseur de gaz, alors qu'on utilise une hauteur d'empilement plus grande pour les étages inférieurs lorsque la colonne fonctionne en réchauffeur de gaz.

D'une manière générale, la hauteur de chaque empilement peut représenter de 3 à 20 fois la dimension moyenne de chaque élément de garnissage.

Il s'est en outre révélé que l'efficacité de l'échange dans un étage est maximale pour une vitesse du courant gazeux, juste sous l'empilement, dont la valeur est voisine de celle de la vitesse limite de chute libre des particules solides considérées. Il s'est même avéré que, contrairement à l'enseignement du

3

brevet français FR-A-978 287, il est possible de faire fonctionner le dispositif à des vitesses moyennes de courant gazeux, juste sous les éléments de garnissage, très sensiblement supérieures à la vitesse limite moyenne de chute des particules solides, permettant ainsi pour un appareillage donné d'obtenir une augmentation de la capacité de traitement. Cependant, en pratique, ce fonctionnement n'est possible qu'à des vitesses du courant gazeux allant jusqu'à environ 1,5 fois la vitesse limite de chute libre des particules solides.

Compte tenu de ce qui précède, il apparaît particulièrement avantageux d'utiliser plusieurs étages ayant des hauteurs d'empilement relativement faibles et de faire passer le courant gazeux dans l'étage le plus chaud à la vitesse la plus élevée possible, c'est-à-dire en pratique à une vitesse supérieure à la vitesse limite moyenne de chute libre des particules et inférieure à 1,5 fois cette vitesse limite, de façon que dans les autres étages la vitesse du courant gazeux soit voisine ou légèrement inférieure à la vitesse correspondante de chute libre des particules et donc de façon que dans chaque étage on soit le plus près possible des conditions correspondant à une efficacité maximale.

En outre, pour augmenter l'efficacité globale de l'échange thermique on peut utiliser une colonne à plusieurs étages dans laquelle on réajuste la vitesse du courant gazeux de manière qu'à l'entrée de chaque étage cette vitesse soit la vitesse optimale, c'est-à-dire voisine de la vitesse limite moyenne de chute libre des particules.

Par exemple, considérant que, dans une colonne à section constante, la vitesse d'un courant gazeux ascendant cédant sa chaleur à des particules solides diminue du bas vers le haut, tandis que la vitesse limite de chute libre des particules augmente, on ajuste la vitesse du courant gazeux en utilisant des étages dont la section diminue dans le sens de l'écoulement du courant gazeux de manière à maintenir cette vitesse à sa valeur optimale dans chaque étage.

Inversement, lorsque le courant gazeux se réchauffe au contact des solides et si la colonne possède une section constante, la vitesse du courant gazeux augmente, alors que la vitesse limite de chute des particules tend à diminuer. On peut alors ajuster la vitesse du courant gazeux en utilisant des étages dont la section augmente dans le sens de l'écoulement du courant gazeux de manière à maintenir cette vitesse, dans chaque étage, à sa valeur optimale.

A cet effet, on peut utiliser des étages au sein de chacun desquels la section varie, la section de la colonne étant constante entre deux étages. On peut également utiliser des étages de différentes sections constantes, reliés entre eux par des portions de colonne de section variable. On peut enfin utiliser une colonne de section variable contenant des étages eux-mêmes de section variable.

D'autres éléments, buts et avantages de la présente invention apparaîtront à la lecture de la description qui va suivre, faite en regard des dessins annexés.

Sur ces dessins :

La Figure 1 représente une installation destinée à la mise en œuvre du procédé selon l'invention ;

Les Figures 2, 3 et 4 représentent diverses variantes d'étages permettant l'ajustement de la vitesse du courant gazeux à la vitesse optimale.

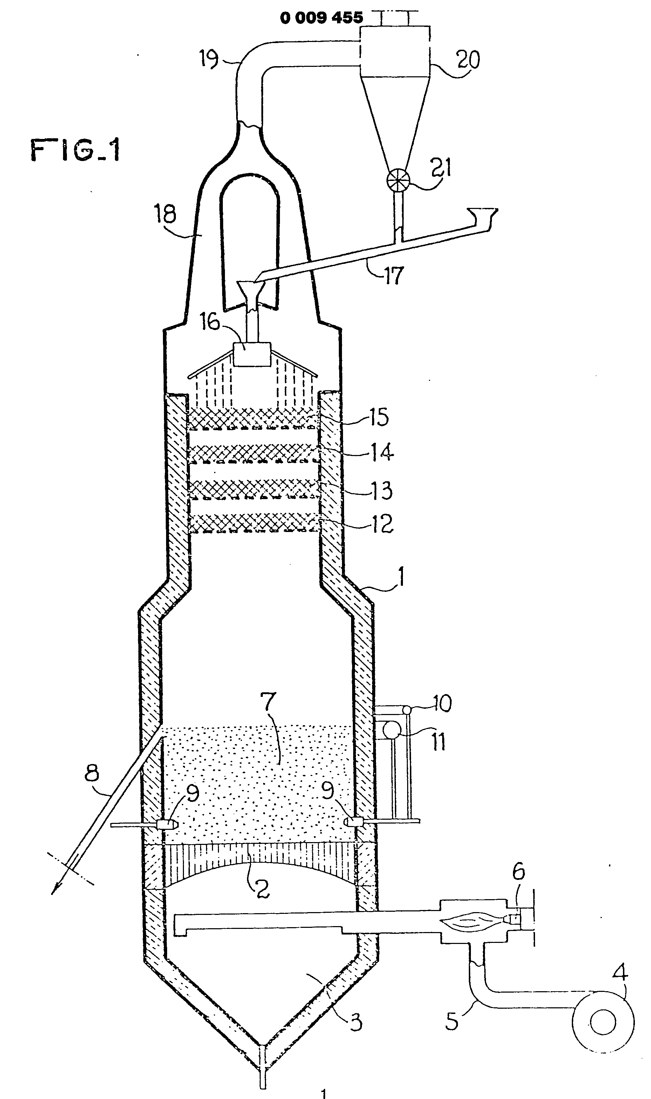

L'installation représentée sur la Fig. 1 comprend une colonne cylindrique 1 garnie intérieurement de briques réfractaires. La colonne 1 comprend une partie supérieure et une partie inférieure, le diamètre de la partie inférieure étant d'environ 1/3 plus élevé que celui de la partie supérieure et ces deux parties étant raccordées par une zone tronconique. La partie inférieure de la colonne 1 comprend une grille de fluidisation 2 au-dessous de laquelle se trouve une boîte à vent 3 alimentée par un compresseur d'air 4 par l'intermédiaire d'une canalisation 5 sur laquelle est disposé un brûleur de préchauffage 6 alimenté en fuel domestique.

La grille 2 supporte un lit 7 de particules fluidisées dont l'excédent est évacué par un trop-plein latéral 8.

Au sein du lit fluidisé 7 sont disposés des brûleurs 9 alimentés en fuel et en air de balayage par deux conduits de distribution 10 et 11.

La partie supérieure de la colonne 1 comprend quatre étages, respectivement 12, 13, 14 et 15, qui sont constitués chacun d'un caillebotis à grandes mailles (60 × 20 mm), formé de lames d'acier réfractaire sur chant de 15 mm × 1 mm soudées par points, ayant une ouverture de 93 %, et supportant un empilement constitué d'anneaux Pall en acier réfractaire de 25 × 25 mm ayant une porosité de 94 %.

Un distributeur rotatif 16 de particules solides distribue des particules sur toute la surface de l'étage 15 qui est le plus élevé. Les particules sont amenées dans le distributeur 16 par un conduit 17.

La colonne comporte au-dessus du distributeur 16 une cheminée 18 d'évacuation du courant gazeux débouchant sur une canalisation 19.

Un cyclone 20 reçoit par la canalisation 19 le courant gazeux évacué et sépare les particules fines qui peuvent être entraînées. Ces particules séparées par le cyclone 20 sont réinjectées dans la canalisation 17 par l'intermédiaire d'un obturateur rotatif 21.

A titre d'exemple, on fait fonctionner une installation de ce type comprenant une colonne d'un diamètre de 1,45 m comportant des empilements d'éléments de garnissage de 15 cm de hauteur en utilisant comme particules du sable ayant la granulométrie suivante :

1 % < 100 μm,

18 % < 160 μm,

45 % < 200 μm,
80 % < 250 μm,
99 % < 400 μm.

Le débit de sable est de 3 250 kg/h. La température d'entrée du sable à la partie supérieure de la colonne est de 25 °C.

Les débits gazeux sont exprimés ci-dessous en valeurs ramenées aux conditions normales.

Le débit d'air de fluidisation est de 1 450 m³/h, et le débit d'air des injecteurs de fuel et des regards de 200 m³/h. Le débit de fuel est de 113,5 kg/h. Le débit des fumées est de 1 715 m³/h.

La température d'entrée de l'air est de 40 °C. La température du lit fluidisé 7 est de 1 200 °C. La température du courant gazeux, juste sous l'étage inférieur, est de 960 °C. La température de sortie du courant gazeux est de 160 °C.

La température du sable à la sortie de l'étage inférieur est de 640 °C.

Juste sous cet étage inférieur, la vitesse du courant gazeux, à la température de 960 °C, est de 1,3 m/s.

La vitesse limite de chute des particules de sable de 200 μm de diamètre à la même température est seulement de 1 m/s.

D'après ces résultats, la vitesse de courant gazeux à l'entrée du premier étage est donc supérieure à la vitesse limite de chute des particules de 200 μm.

Au-dessus des étages, à la température de 160 °C, la vitesse du courant gazeux est seulement de 0,45 m/s, alors que la vitesse limite de chute des particules de 200 μm à cette température est de 1,4 m/s. Au-dessus des étages, le rapport des vitesses est inversé et seules les particules de nettement plus faible dimension risquent d'être entraînées.

Il apparaît donc que, contrairement à ce que l'on pensait, il est possible de faire fonctionner de façon efficace un tel dispositif à des vitesses moyennes du courant gazeux dans au moins l'un des étages, qui sont supérieures à la vitesse limite de chute des particules et en pratique inférieures à 1,5 fois cette vitesse.

Par ailleurs, on a procédé à des essais comparatifs en utilisant une colonne du type représenté sur la Fig. 1, ayant un diamètre interne de 32 cm et ne comportant qu'un étage rempli d'anneaux Pall de 25 × 25 mm en grès vernissé, ayant une porosité de 74 %, supporté par un caillebotis ayant une ouverture de 90 %.

On a fait passer à travers cette colonne du sable ayant une granulométrie moyenne de 200 μm à un débit de 270 kg/h. La température d'entrée du sable était de 50 °C et la température d'entrée du gaz de 250 °C.

On a mesuré l'augmentation ΔT de la température de sortie du sable pour différentes vitesses du gaz juste sous l'étage et différentes hauteurs de l'empilement.

Les résultats sont donnés dans le tableau suivant (ΔT en °C) :

| Hauteur | Vitesse m/s | | |
|---|---|---|---|
| | 0,8 | 1,2 | 1,6 |
| 140 mm | 85 | 104 | 100 |
| 250 mm | 94 | 110 | 101 |
| 400 mm | 98 | 115 | 103 |

Nota : à 250 °C la vitesse de chute libre des particules de $\varnothing$ = 200 μm est d'environ 1,35 m/s.
Ces résultats mettent en évidence les faits suivants :

1. Aux vitesses élevées (1,6 m/s) une augmentation de la hauteur de l'empilement n'augmente pas de façon notable l'efficacité ; il apparaît donc avantageux d'utiliser une hauteur d'empilement de 140 mm pour l'étage inférieur.

2. L'efficacité est maximale pour une vitesse du courant gazeux voisine de la vitesse limite de chute libre des particules.

3. Pour une hauteur d'empilement de 140 mm l'efficacité à la vitesse du courant gazeux de 1,6·m/s n'est que très légèrement inférieure à l'efficacité maximale.

4. Pour des vitesses du courant gazeux plus faibles, une augmentation de la hauteur d'empilement apporte une augmentation de l'efficacité d'autant plus importante que la vitesse du courant gazeux est plus faible.

Il apparaît donc avantageux d'utiliser pour l'étage inférieur une faible hauteur d'empilement (140 mm) mais de faire passer le courant gazeux à travers cet étage à une vitesse, mesurée sous l'étage, supérieure à la vitesse limite de chute libre (par exemple 1,6 m/s) et d'utiliser, au-dessus, des étages ayant des hauteurs d'empilement croissantes (par exemple 250 mm pour le 2ème étage, 400 mm pour le troisième, etc...).

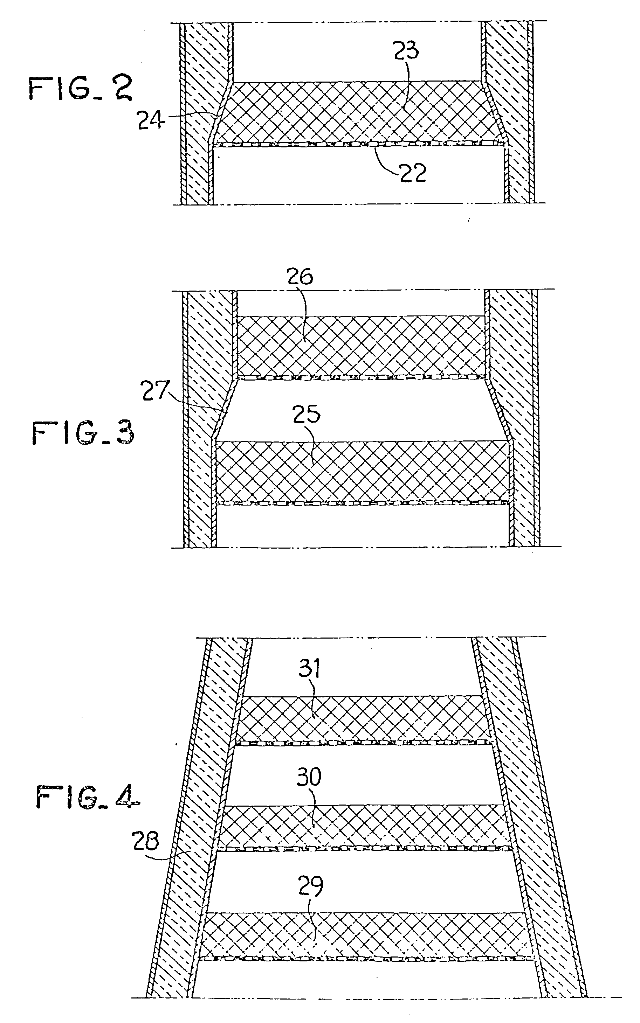

On a représenté sur les Fig. 2, 3 et 4 différents étages qui permettent de maintenir la vitesse de courant gazeux à la valeur optimale, dans le cas d'un courant gazeux se refroidissant.

L'étage représenté sur la Fig. 2 comprend une grille 22 à larges mailles supportant un empilement d'anneaux Pall 23, ainsi qu'une enveloppe 24 de forme conique se rétrécissant vers le haut. Les sections au-dessous et au-dessus de l'étage sont constantes. La section supérieure est ajustée en fonction de la température atteinte au-dessus de l'étage, de façon à réajuster la vitesse du courant gazeux à l'entrée de l'étage suivant.

Les étages représentés sur la Fig. 3 sont des étages de section constante. L'étage inférieur 25 est relié à l'étage supérieur 26 de plus faible section par une partie de colonne 27 de forme conique.

Les étages représentés sur la Fig. 4 sont disposés dans une colonne 28 de forme conique se rétrécissant vers le haut. Les étages 29, 30 et 31 disposés à l'intérieur de cette colonne présentent la même conicité.

Le dispositif selon la présente invention peut être utilisé non seulement pour réchauffer des particules solides, mais également pour récupérer de la chaleur de particules solides chaudes telles que des sables de fonderie que l'on a fait brûler.

On peut également utiliser deux colonnes combinées fonctionnant l'une comme récupérateur de chaleur, l'autre comme réchauffeur avec les mêmes particules solides. Cette solution permet de réaliser un échange gaz-gaz avec de faibles pertes de charge et éventuellement un stockage intermédiaire de la chaleur sensible en utilisant les particules solides comme milieu caloporteur.

**Revendications**

1. Dispositif d'échange thermique par mise en contact direct de particules solides s'écoulant par gravité et d'un courant gazeux ascendant dans une colonne comprenant au moins un étage (12) constitué d'un empilement (12a) d'éléments de garnissage disposés sur un support (12b), ce dispositif étant caractérisé en ce que, afin qu'il ne se forme pas, au contact dudit support (12b), de lit fluidisé dense, le taux d'ouverture du support (12b) est au moins égal à 75 % de la porosité de l'empilement (12a) des éléments de garnissage, la perte de charge du courant gazeux à travers ce support (12b) étant rendue négligeable devant celle à travers l'empilement (12a), et la vitesse moyenne du courant gazeux dans l'étage (12) étant comprise entre 1 fois et 1,5 fois la vitesse moyenne de chute libre des particules.

2. Dispositif selon la revendication 1, caractérisé en ce que le support (12b) a un taux d'ouverture au moins égal à 90 % de la porosité de l'empilement (12a) des éléments de garnissage.

3. Dispositif selon l'une quelconque des revendications 1 et 2, caractérisé en ce que la hauteur de chaque empilement (12a) de garnissage représente de 3 à 20 fois la hauteur de chaque élément de garnissage.

4. Dispositif selon l'une quelconque des revendications précédentes, caractérisé en ce que la colonne comprend plusieurs étages (12,13...), et que la vitesse du courant gazeux dans l'étage le plus chaud est comprise entre la vitesse limite moyenne de chute libre des particules et 1,5 fois cette vitesse.

5. Dispositif selon l'une quelconque des revendications précédentes, dans lequel le courant gazeux se refroidit au contact des particules solides, caractérisé en ce que la colonne comprend plusieurs étages (12, 13, ...), dont la section diminue dans le sens de l'écoulement du courant gazeux.

6. Dispositif selon l'une quelconque des revendications 1 à 5, dans lequel le courant gazeux se refroidit au contact des particules solides, caractérisé en ce que la colonne comprend plusieurs étages (12, 13, ...), dont la hauteur d'empilement (12a, 13a, ...) augmente dans le sens de l'écoulement du courant gazeux.

7. Dispositif selon l'une quelconque des revendications 1 à 4, dans lequel le courant gazeux se réchauffe au contact des particules solides, caractérisé en ce que la colonne comprend plusieurs étages (12, 13, ...), dont la section augmente dans le sens de l'écoulement du courant gazeux.

8. Dispositif selon l'une quelconque des revendications 1 à 4 et 7, dans lequel le courant gazeux se réchauffe au contact des particules solides, caractérisé en ce que la colonne comprend plusieurs étages (12, 13, ...), dont la hauteur de l'empilement (12a, 13a, ...) diminue dans le sens de l'écoulement gazeux.

**Claims**

1. A device for heat exchange by direct contact of solid particles flowing under gravity and a gaseous stream ascending in a column comprising at least one stage (12) formed of a stack (12a) of packing elements arranged on a support (12b), the device being characterised in that so that a dense fluidised bed is not formed in contact with said support (12b), the opening ratio of the support (12b) is equal to at

6

least 75 % of the porosity of the stack (12a) of packing elements, the loss of pressure of the gaseous stream through this support (12b) being negligible in relation to that through the stack (12a) and the mean velocity of the gaseous stream in the stage (12a) being from 1 to 1.5 times the mean velocity in free fall of the particles.

2. A device according to claim 1, characterised in that the support (12b) has an opening ratio equal to at least 90 % of the porosity of the stack (12a) of packing elements.

3. A device according to claim 1 or 2, characterised in that the height of each stack (12a) of packing elements is from 3 to 20 times the height of each packing element.

4. A device according to any one of the preceding claims, characterised in that the column comprises a plurality of stages (12, 13, ...) and that the velocity of the gaseous stream in the coldest stage in between the average terminal velocity in free fall of the particles and 1.5 times this velocity.

5. A device according to any one of the preceding claims, in which the gaseous stream is cooled on contact with the solid particles, characterised in that the column comprises a plurality of stages (12, 13 ...) of which the cross-section reduces in the direction of flow of the gaseous stream.

6. A device according to any one of claims 1 to 5, in which the gaseous stream is cooled on contact with the solid particles, characterised in that the column comprises a plurality of stages (12, 13 ...) of which the height of stacking (12a, 13a ...) increases in the direction of flow of the gaseous stream.

7. Device according to any one of claims 1 to 4, in which the gaseous stream is heated on contact with the solid particles, characterised in that the column comprises a plurality of stages (12, 13 ...) of which the cross-section increases in the direction of flow of the gaseous stream.

8. Device according to any one of claims 1 to 4 and 7, in which the gaseous stream is heated on contact with the solid particles, characterised in that the column comprises a plurality of stages (12, 13 ...) of which the height of stacking (12a, 13a ...) reduces in the direction of flow of the gaseous stream.

**Ansprüche**

1. Vorrichtung zum Wärmeaustausch durch unmittelbaren Kontakt von unter Schwerkraftwirkung absinkenden Feststoffpartikeln und einem Gasstrom, der in einer Kolonne aufsteigt, die wenigstens einen Boden (12) aus einer Schüttung (12a) aus auf einem Auflager (12b) vorgesehenen Füllkörpern aufweist, dadurch gekennzeichnet, daß zur Verminderung der Bildung eines zu dichten Schwebebettes in Kontakt mit dem Auflager (12b) das Öffnungsverhältnis des Auflagers (12b) wenigstens gleich 75 % der Porosität der Füllkörperschüttung (12a) beträgt, wobei der Druckabfall des Gasstromes über das Auflager (12b) vernachläßigbar gegenüber dem über die Füllkörperschüttung (12a) gehalten ist und die mittlere Geschwindigkeit des Gastromes in diesem Boden (12) zwischen dem 1 bis 1,5-fachen der mittleren Geschwindigkeit des freien Falles der Partikel beträgt.

2. Vorrichtung nach Anspruch 1, dadurch gekennzeichnet, daß das Auflager (12b) ein Öffnungsverhältnis von wenigstens gleich 90 % der Porosität der Füllkörperschüttung (12a) aufweist.

3. Vorrrichtung nach einem der Ansprüche 1 und 2, dadurch gekennzeichnet, daß die Höhe jeder Füllkörperschüttung (12a) das 2 bis 30-fache der Höhe jedes Füllkörperelementes beträgt.

4. Vorrichtung nach einem der vorhergehenden Ansprüche, dadurch gekennzeichnet, daß die Kolonne mehrere Böden (12, 13, ...) aufweist und daß die Geschwindigkeit des Gasstromes im heißesten Boden zwischen der mittleren Grengzgeschwindigkeit des freien Falles der Partikel und dem 1,5-fachen dieser Geschwindigkeit beträgt.

5. Vorrichtung nach einem der vorhergehenden Ansprüche, in der sich der Gasstrom in Kontakt mit den Festkörperpartikeln abkühlt, dadurch gekennzeichnet, daß die Kolonne mehrere Böden (12, 13, ...) aufweist, deren Querschnitt im Abströmsinn des Gasstromes abnimmt.

6. Vorrichtung nach einem der Ansprüche 1 bis 5, in der sich der Gasstrom in Kontakt mit den Festkörperpartikeln abkühlt, dadurch gekennzeichnet, daß die Kolonne mehrere Böden (12, 13, ...) aufweist, deren Höhe der Schüttung (12, 13a, ...) im Abströmsinn des Gasstromes zunimmt.

7. Vorrichtung nach einem der Ansprüche 1 bis 4, in der sich der Gasstrom in Kontakt mit den Festkörperpartikeln erhitzt, dadurch gekennzeichnet, daß die Kolonne mehrere Böden (12, 13, ...) aufweist, deren Querschnitt im Abströmsinn des Gasstromes zunimmt.

8. Vorrichtung nach einem der Ansprüche 1 bis 4 und 7, in der sich der Gasstrom in Kontakt mit den Festkörperpartikeln erhitzt, dadurch gekennzeichnet, daß die Kolonne mehrere Böden (12, 13, ...) aufweist, deren Höhe der Schüttung (12a, 13a, ...) im Abströmsinn des Gasstromes abnimmt.

FIG.1

FIG_2

23

24

22

FIG_3

26

27

25

FIG_4

31

30

28

29